# EUROPEAN PATENT SPECIFICATION

(11) **EP 2 671 911 B1**
(45) Date of publication and mention of the grant of the patent: **12.10.2016**
(21) Application number: 12170784.8
(22) Date of filing: 05.06.2012
(51) Int. Cl.: C08J 9/22, E04C 2/288, B29C 47/00, B29C 44/46

(54) **A foam material with very low thermal conductivity and a process for manufacturing the foam material**
Schaumstoffmaterial mit geringer Wärmeleitfähigkeit und Herstellungsverfahren dafür
Matériau en mousse à conductivité thermique faible et son procédé de fabrication

(43) Date of publication of application: 11.12.2013
(73) Proprietor: Armacell Enterprise GmbH & Co. KG, 12529 Schönefeld OT Waltersdorf (DE)
(72) Inventor: Meller, Mika, 04400 Jarvenpaa (FI); Li, Jie, 4800 Zofingen (CH); Dolega, Justyna, 51164 Wroclaw (PL)
(74) Representative: von Füner, Nicolai

(56) References cited:
- EP-B1- 2 343 330
- WO-A1-2009/134425
- US-A- 3 492 249
- US-A- 4 154 785
- MARCELO ANTUNES ET AL: "Heat Transfer in Polypropylene-Based Foams Produced Using Different Foaming Processes", ADVANCED ENGINEERING MATERIALS, vol. 11, no. 10, 1 October 2009 (2009-10-01), pages 811-817, XP055046110, ISSN: 1438-1656, DOI: 10.1002/adem.200900129

## Description

This invention relates to polyester based expanded materials made either of virgin or of post-consumer polyethylene terephthalate being characterized by very low thermal conductivity (< 0.032 W/mK). The expanded materials are furthermore characterized by being made by reactive foam extrusion, where the intrinsic viscosity (IV) is upgraded during an extrusion process. The invention covers the manufacturing of such materials and the use of products made thereof.

Expanded polyester polymers, i.e. polyester foam or sponge, are of major importance for a large number of applications related to e.g. insulation against temperature gradients, noise shielding, vibration damping, lightweight construction etc. Foaming of polyesters and the use of recycled (post-consumer) polyester are rather new technologies, and only limited numbers of prior art can be found. The term foamed polyester is used in this publication to describe foams where the main component is polyester based, typically polyethylene terephthalate (PET). It may be blended with other polymers to improve characteristics, but a majority (> 60%) of the blend is PET. The most recent published information on thermal conductivity of polyester foams can be found in different datasheets from leading polyester foam manufacturers, such as 3A composites (http://www.corematerials.3acomposites.com/airex-92.html?&no_cache=1&tx_abdownloads_pi1[action]=getviewclickeddownload&tx_ab downloads_pi1[uid]=6), DIAB group (http://www.diabgroup.com/europe/literature /e_pdf_files/ds_pdf/P_DS_EU.pdf), and Armacell (http://www.armacell.com/www/ armacell/ACwwwAttach.nsf/ansFiles/ArmaFORM%20PET_TDS.pdf/$FILE/ArmaFOR M%20PET_TDS.pdf). From these it is evident that the typical thermal conductivity values are measured in range of 0.033 to 0.043 W/mK.

EP 0866089 describes that significantly higher than standard intrinsic viscosity (IV) resin (IV > 1.2 ml/g) is required for physical foaming of polyester, especially when lower densities are targeted. A high viscosity and high melt strength are required in order to build up necessary pressure for foaming to occur and to prevent cell collapse. Traditionally solid state polymerization is used to increase the molecular weight and hence viscosity to the required level.

Typical polyester foams, similarly as other thermoplastic foams, such as polyethylene, polypropylene and polystyrene have thermal conductivity in the range of 0.032-0.050 W/mK at room temperature.

WO 2009/134425 A1 relates to the field of thermal insulation and discloses an article comprising a material system with at least 95% porosity, wherein said porosity consists of nanopores comprising embeded inert gas and having a pore size of no more than 1500 nanometers in its shortest dimension. The material may comprise a polymer, reactive oligomer, and/or monomer, wherein the reactive oligomer may comprise an ethylenically unsaturated styrene, urethane, and mixtures thereof.

US 4 154 785 A refers to a tough board of thermoplastic resin foam of low density having solid skin layers and an intermediate layer with elongated large cells, wherein the average dimension of cells in the direction of the thickness of the board may bear a ratio of between 1,5 to 5 to the average dimension of the cells in the lengthwise direction of the board.

US 3 492 249 A discloses a Poly(p-phenylene oxide) foam having elongated cells, wherein the length of the cells is at least five times their largest width.

Marcelo Antunes et al. "Heat Transfer in Polypropylene-Based Foams Produced Using Different Foaming Processes", Advanced Engineering Materials, Vol:11, Nr:10, Page(s):811 - 817, ISSN 1438-1656 discloses PP foams with a density below 150 kg/m³ and an aspect ratio up to 9.39.

### Brief description of the figures

- Figure 1:: Schematic illustration of extrusion dies used in the examples, where d₁ means the distance between the holes and d₂ the diameter of the holes.
- Figure 2.: Definition of aspect ratio.
- Figure 3.: Micrographs of cellular structure of foams made in a) comparative example 3 and, b) innovative example 1.
- Figure 4.: Schematic presentation of two types of foam: regular PET and novel PET foam according to the invention.

The invention will be described in more detail below with reference to examples.

This invention presented here discloses a thermoplastic foam material according to any of claims 1 to 5, and a method to manufacture said foam material according to claim 6 having much lower thermal conductivity by selecting an extrusion tooling (multihole die) in a way that the foam material must be significantly stretched, producing strong cellular orientation with aspect ratio significantly larger than 1.5, ideally even larger than 2.0. The present invention discloses also a foam article obtained from the foam material according to any of claims 1 to 5. In order for the foam material to be able to resist such stretching motion, also the melt strength of the material needs to be increased by means of chain extension via reactive extrusion.

Because high viscosity resins, such as described in EP 0866089, are not widely available, recent technological advances have focused on reactive extrusion. During the subsequent foam extrusion chain extending additives need to be added to raise the intrinsic viscosity to a level above 1.2 ml/g. For example EP2163577A1, EP2343330B1, EP 2009043B2, EP2048188A1, WO2009149845A1, US4145466A, and US5000991 describe such technologies in detail. For this invention a reactive additive masterbatch (MB) that increases the viscosity by chain extension and side chain branching during extrusion (described as chain extending concentrate in EP2343330B1) has been used. The chemistry of this masterbatch is based on combination of multifunctional chain extenders for linear and side chain extension, combined with various antioxidants and process stabilizers embedded in carefully selected matrix polymer suitable for PET extrusion. Further additives, e.g. nucleating agents, fillers, flame retardants etc. can be added to adjust the properties of the foam. As such additives are considered known to person skilled in the art, these have not been listed in detail. However, additional less known additives typically not used in polyester foam extrusion have been evaluated, and these could be selected from any reflective, metal-like particles, such as aluminium flakes, graphite powder or metallic nanoparticles.

In the invention, a twin-screw extruder is used. In all below trials, a modified twin-screw extruder from Berstorff^{®} was used. The extruder was equipped with special screws made for PET foaming, having compressive ratio larger than 2.0, and L/D larger than 28. Furthermore reversed elements need to be used in order to prevent gas escape backwards from the injection area. A physical blowing agent or a mixture of physical blowing agents was injected after the melting zone under high pressure, and consequently the melt was mixed by means of screw elements and static mixer. The blowing agents are typically selected from the group of hydrocarbons, fluorocarbons, carbon dioxide, argon, nitrogen or a mixture thereof. Furthermore, also a chemical blowing agent may be added to improve the efficiency of said blowing agents, or to improve the cellular structure. In each example the level of blowing agent(s) was adjusted to achieve the target density. The resulting mixture of blowing agent and polymer was cooled during extrusion close to crystallization point while a sufficient pressure was maintained by controlling the viscosity of the resin and the temperature of the mixture.

The reactive additive masterbatch (MB) was used in different levels to adjust the viscosity and pressure to a sufficient level (typically min. 60 bars measured in the extruder head). As the molten, gas-laden mixture exited the extruder, the rapid pressure drop caused rapid foaming of the polymer, whereby the cell size was controlled by the level of special nucleating agent. Nucleating agent could be an inorganic material (in this case a talc containing masterbatch, organic material or a gaseous material). Furthermore, a flame retardant additive, such as phosphate, halogen, borate, melamine, stannate or similar component may be used for applications where fire retardancy is required. The foam was then cooled down and later analyzed in the laboratory. All raw materials were dried to contain moisture below 100 ppm prior to feeding into the extruder (resin preferably below 50 ppm).

In this invention polyester based materials, preferably virgin and post consumer polyethylene terephthalate that have a starting IV from 0.56 up to 0.82 have been used, where by means of reactive foam extrusion the IV of the polymer is increased in a single step to a satisfactory level while at the same time a physical blowing agent is introduced to the mixture. As the mixture exits the extruder, the IV has reached a level superior to 1.2 ml/g, and consequently by sudden pressure drop the physical blowing agent rapidly expands and foaming takes place. Virgin material is defined as raw material coming from PET producer, and may be supplied in form of powder or granules (pellets). Post consumer material is typically available in form of flakes or granules, and may contain any products made of PET, such as bottles, food packaging material or blisters, which have been collected, shredded and washed by special recycling companies.

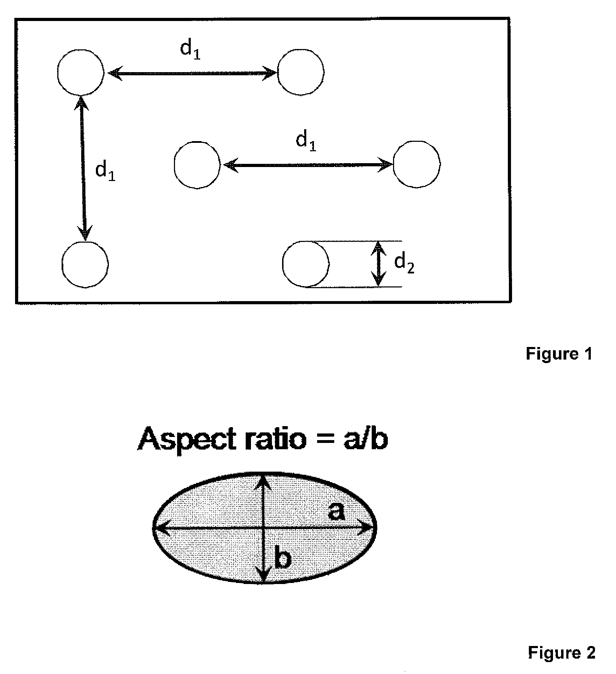

The final shape of extrudate (board) is defined by an extrusion tool (die), and in this invention a multihole die is used (US3413387). The diameter of the numerous holes is estimated from natural expansion factor, and typically the lower the density, the smaller the holes or longer the distance between the holes must be used (depicted as d₁ and d₂ in Figure 1). After the die typically a calibrator (referred to as shaper in WO2005035217) is used, which helps the foam to maintain its shape during solidification and cooling. Natural three dimensional expansion may be promoted by opening the calibrator and running the puller at minimum possible speed. This was done in one of the examples.

It was unexpectedly found, that by using the correct reactive extrusion components, the lower density foam may be extruded using an incorrect choice of extrusion tooling, that is with a tooling made for higher density product having a density of 150 Kg/m³. If the mixture is defined correctly, the foam will resist the increased pulling force without breaking. Such action creates a foam body with very elongated cellular structure. This elongated cell structure results in even more anisotropic properties and subsequently also a very low thermal conductivity.

Figure 2 depicts the definition of aspect ratio, which is the length of the cell (see a) in Fig.2) divided by the height of the cell (see b) in Fig. 2). For circular cells the value equals to one (1). Effect of aspect ratio on extruded polystyrene (PS) foams has been studied (Nagata, S. and Koyama, K., "A New Method for Estimating the Cellular Structure of Plastic Foams Based on Dielectric Anisotropy", Pol.Eng.Sci. Vol.39, No. 5 (1999), p.896-903), and the maximum aspect ratio reached in this study was 1.422, similar to highest values measured for regular PET foams. Most of the values were in between 0.8 and 1.1.

In the examples three different die configurations were used. These are listed in Table 1. The larger diameter tooling was designed for higher density products, such as 150 kg/m³, whereas the smallest diameter tooling was designed for low density products, typically used for densities of 80, 60 and 40 kg/m³.

**Table 1. Details of extrusion dies used in the examples.**

| | **Die #1** | **Die #2** | **Die #3** |
|---|---|---|---|
| **Distance between the holes, d₁ (mm)** | 6.0 | 6.0 | 5.8 |
| **Diameter of the holes, d₂ (mm)** | 1.7 | 1.4 | 1.1 |

### Comparative example 1:

Ramapet 9921^{®} PET resin from Indorama was fed to an extruder together with 2.5% of commercial talc containing nucleating agent and with 0.4% reactive additive masterbatch (MB). Throughput was kept constant at 400 kg/hr, and the blowing agent was adjusted so that the foamed end-product had a density of 150 kg/m³. The die that was used in this example was die #1. The calibrator was kept closed and foam expansion was constrained. Foam with very uniform and small cell size was obtained, the cells having an average aspect ratio of 1.3. No voids or other inhomogeneities were observed.

### Comparative example 2:

Ramapet 9921^{®} PET resin from Indorama was fed to an extruder together with 2.5% of commercial nucleating agent and with 0.4% reactive additive masterbatch (MB). Throughput was kept constant at 400 kg/hr, and the blowing agent was adjusted so that the foamed end-product had a density of 115 kg/m³. The die that was used in this example was die #2. The calibrator was kept closed and foam expansion was constrained. Foam looked very similar to that of comparative example 1, however having slightly larger cellular structure and more round cells (lower aspect ratio).

### Comparative example 3:

Ramapet 9921^{®} PET resin from Indorama was fed to an extruder together with 2.5% of commercial nucleating agent and with 0.42% reactive additive masterbatch (MB).

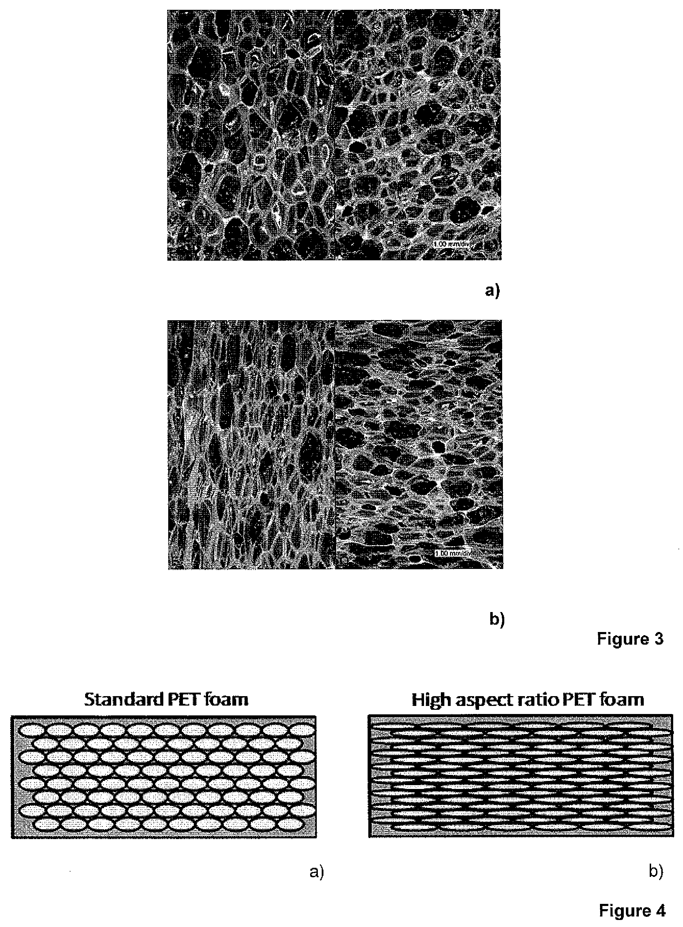

Throughput was kept constant at 400 kg/hr, and the blowing agent was adjusted so that the foamed end-product had a density of 80 kg/m³. The die that was used in this example was die #3. The calibrator was kept closed and foam expansion was constrained. Homogeneous foam with uniform cellular structure was obtained. The cellular structure is shown in Figure 3a.

### Innovative example 1:

Ramapet 9921^{®} PET resin from Indorama was fed to an extruder together with 2.5% of commercial nucleating agent and with 0.42% reactive additive masterbatch (MB). Throughput was kept constant at 400 kg/hr, and the blowing agent was adjusted so that the foamed end-product had a density of 80 kg/m³. The die #3 was changed now to die #1. The calibrator was kept closed and foam expansion was constrained. Because of over-expansion, the foam needed to be pulled with much higher speed than in comparative example 3. However, homogeneous and stable foam was obtained, with clearly elongated cellular structure (see Figure 3b). The aspect ratio increases from average of 1.4 to over 2.2, indicating significant orientation of cells.

### Comparative example 4:

Ramapet 9921^{®} PET resin from Indorama was fed to an extruder together with 2.5% of commercial nucleating agent and with 4.0% commercial chain extension additive Viscosity booster Kane Ace MP-40 from Kaneka^{®}. Throughput was kept constant at 400 kg/hr, and the blowing agent was adjusted so that the foamed end-product had a density of 80 kg/m³. The die that was used in this example was die #1 (similar to innovative example 1). The calibrator was kept closed and foam expansion was constrained. The foam was torn inside the calibrator, and no foam could be obtained for further testing.

### Comparative example 5:

PET resin from Indorama was fed to an extruder together with 2.5% of commercial nucleating agent and with with 4.0% commercial chain extension additive Viscosity booster Kane Ace MP-40 from Kaneka^{®}. Throughput was kept constant at 400 kg/hr, and the blowing agent was adjusted so that the foamed end-product had a density of 80 kg/m³. The die that was used in this example was die #1. The calibrator was left open and foam was allowed to freely expand. Foam was obtained with relatively low extrusion pressure, and the cell structure was coarse and inhomogeneous.

### Innovative example 2:

Granulated PET post consumer resin from PTP (PET-M green) was fed to an extruder together with 1.25% of aluminium platelets containing masterbatch (Granula MB Silber 8202 with 40% concentration of aluminium) and with 0.52% reactive additive masterbatch (MB). Furthermore 7.5% of Exolit 950^{®} flame retardant was added to the mixture. Throughput was kept constant at 400 kg/hr, and the blowing agent was adjusted so that the foamed end-product had a density of 115 kg/m³. The die that was used in this example was die #1. The calibrator was kept closed and foam expansion was constrained. Foam looked very similar to that of Innovative example 1, but had more visible voids, indicating higher level of open cells.

Table 2 lists the extrusion conditions of the different examples listed above. The increased line speed is due to limited expansion which had to be controlled by excessive pulling. In the case of comparative example 4, the material viscosity was not upgraded sufficiently, and the foam broke upon pulling. Therefore no extrusion conditions could be listed. The density was measured according to ISO 845.

**Table 2. Extrusion conditions for different examples.**

| | **CE 1** | **CE 2** | **CE 3** | **IN 1** | **CE 5** | **IE 2** |
|---|---|---|---|---|---|---|
| **Height (mm)** | 64.1 | 65.2 | 66.7 | 62.3 | 59.0* | 61.7 |
| **Width (mm)** | 1031 | 1031 | 1032 | 1026 | 990* | 1024 |
| **Line speed (m/min)** | 1,28 | 1,32 | 1,35 | 1,5 | 1,21 | 1,5 |
| **Density (kg/m³)** | 148,8 | 115,6 | 80,2 | 79,8 | 88,6* | 78,9 |

| | | | | | | |
|---|---|---|---|---|---|---|
| ** Average value: unstable board* | | | | | | |

All samples received from different examples were tested for mechanical properties (according to ISO 844 for compression and ISO 1922 for shear properties), water intake (ASTM C272), water vapour transmission WVT (DIN 52615), average aspect ratio of cells by microscopy (measuring height and length), and for thermal conductivity (according to ISO 12677). The results are listed in Table 3.

**Table 3. Testing results for different examples (- not measured).**

| | **CE 1** | **CE 2** | **CE 3** | **IE 1** | **CE 5** | **IE 2** |
|---|---|---|---|---|---|---|
| **Compr. strength (MPa)** | 2.35 | 2.07 | 0.92 | 1.01 | - | 0.99 |
| **Compr. modulus (MPa)** | 58.8 | 58.4 | 28.5 | 32.1 | - | 30.4 |
| **Shear strength (MPa)** | 1.38 | 0.96 | 0.51 | 0.51 | - | 0.49 |
| **Shear modulus (MPa)** | 32 | 24 | 12 | 14 | - | 12 |
| **Shear elong. @ break (%)** | 14 | 23 | 47 | 42 | - | 28 |
| **Average aspect ratio of cells** | 1.3 | 1.2 | 1.4 | 2.2 | - | 1.9 |
| **Water absorption (%)** | 2,8 | 2,7 | 3,2 | 28,8 | 19,2 | 45,3 |
| **Lambda at 40°C (W/mK)** | 0,037 | 0,035 | 0,034 | 0,025 | 0,037 | 0,024 |
| **WVT** | 2210 | 2100 | 1945 | 1560 | - | 1050 |
| **SBI test (EN13501-1)** | - | - | Es2d0 | Es2d0 | - | Ds2d0 |

The results clearly indicate that the materials ability to resist pulling enables significantly elongated cellular structure, which on the other hand improves the thermal conductivity. Furthermore a small addition of reflective particles, such as aluminium, improves the thermal conductivity even further. It is recognized that the higher open cell count also may help to improve thermal conductivity, but without pulling and correct choice of extrusion tooling, this would not be possible. The two types of foam made in this study, a standard PET foam and highly insulating (high aspect ratio) PET foam, are schematically depicted in Figure 4.

## Claims

1. A thermoplastic foam material wherein the foam material is a polyester based material and wherein the polyester is virgin or post-consumer polyethylene terephthalate, or a mixture of the two and wherein the foam material is **characterized by** elongated cells, which have an aspect ratio larger than 1.5, and by a density according to ISO 845 of lower than 150 kg/m³, preferably lower than 80 kg/m³, and by a thermal conductivity of lower than 0.032 W/mK measured according to ISO 12677, and is obtainable from the method of claim 6.

2. The foam material according to claim 1, wherein additionally polymer blends are present in an amount of not more than 40 wt % and wherein the additional polymer blends are selected from the group of polyalkylene terephthalates, polylactic acid, polycarbonate, polyolefins, polyacrylates, polyamides, thermoplastic elastomers, core-shell polymers, liquid crystal polymers (LCP), or a mixture thereof.

3. The foam material according to any of the preceding claims, wherein the foam material comprises reflective inorganic additives, such as aluminium, silver, graphene, carbon nanotubes, clay, mica, or graphite based particles.

4. The foam material according to any of the preceding claims, wherein the foam material comprises flame retardant additives.

5. The foam material according to any of the preceding claims, wherein the foam material is laminated with polymeric, glass or carbon fiber containing polymeric, and/or aluminium laminates or sheets.

6. A manufacturing process for making the foam material according to any of claims 1 to 5 by reactive foam extrusion through a multihole die which is selected in a way that the foam material must be significantly stretched, producing strong cellular orientation with aspect ratio significantly larger than 1.5, and wherein the intrinsic viscosity of the polymer is increased to 1.2 ml/g or higher during reactive extrusion by adding chain extending additives and wherein the extruder is equipped with screws having a compressive ratio larger than 2.0 and a L/D larger than 28, and wherein the extrusion tooling is designed for a higher density product having a density of 150 kg/m³.

7. A foam article obtained from the foam material according to any of claims 1 to 5.

## Patentansprüche

1. Thermoplastisches Schaummaterial, das ein Material auf Polyesterbasis darstellt, wobei der Polyester Frisch- oder Wiederverwendungs-Polyethylenterephthalat oder ein Gemisch aus Beiden ist und das Schaummaterial **gekennzeichnet ist durch** verlängerte Zellen, die ein Seitenverhältnis von über 1,5 aufweisen, und **durch** eine Dichte gemäß ISO 845 von unter 150 kg/m³, vorzugsweise von unter 80 kg/m³, und **durch** eine Wärmeleitfähigkeit von unter 0,032 W/mK, gemessen nach ISO 12677, und das nach dem Verfahren nach Anspruch 6 erhalten werden kann.

2. Schaummaterial nach Anspruch 1, wobei zusätzlich Polymermischungen in einer Menge von höchstens 40 Gew.-% vorliegen und diese zusätzlichen Polymermischungen ausgewählt sind aus der Gruppe der Polyalkylenterephthalate, Polymilchsäure, Polycarbonat, Polyolefine, Polyacrylate, Polyamide, thermoplastische Elastomere, Kern-Schale-Polymere, Flüssigkristallpolymere (LCP) oder eine Mischung davon.

3. Schaummaterial nach einem der vorhergehenden Ansprüche, wobei das Schaummaterial rückstrahlende anorganische Additive wie Aluminium, Silber, Graphen, Kohlenstoffnanoröhrchen, Ton, Glimmer oder auf Graphit basierende Partikel umfasst.

4. Schaummaterial nach einem der vorhergehenden Ansprüche, wobei dieses Flammschutzadditive umfasst.

5. Schaummaterial nach einem der vorhergehenden Ansprüche, wobei dieses laminiert ist mit Polymer-, Glas- oder Kohlenstofffasern enthaltenden Polymer- und/oder Aluminium-Laminaten oder -Platten.

6. Verfahren zur Herstellung des Schaummaterials nach einem der Ansprüche 1 bis 5 durch reaktive Schaumextrusion durch eine Mehrlochdüse, die so ausgewählt ist, dass das Schaummaterial stark gestreckt werden muss, wodurch eine stark zelluläre Ausrichtung erzeugt wird mit einem Seitenverhältnis von weit über 1,5, und wobei die innere Viskosität des Polymers auf 1,2 ml/g oder darüber während der reaktiven Extrusion durch Zugabe von Kettenverlängerungsadditiven angehoben wird und der Extruder mit Schrauben ausgestattet ist, die ein Druckverhältnis über 2,0 und einen L/D-Wert von über 28 aufweisen, und das Extrusionswerkzeug für ein Produkt von höherer Dichte mit einer Dichte von 150 kg/m³ ausgelegt ist.

7. Schaumerzeugnis, erhalten aus dem Schaummaterial nach einem der Ansprüche 1 bis 5.

## Revendications

1. Matériau en mousse thermoplastique dans lequel le matériau en mousse est un matériau à base de polyester et dans lequel le polyester est du polyéthylène téréphtalate vierge ou post-consommateur, ou un mélange des deux, et dans lequel le matériau en mousse est **caractérisé par** des cellules allongées, qui présentent un rapport de forme supérieur à 1,5, et par une densité selon la norme ISO 845 inférieure à 150 kg/m³, de préférence inférieure à 80 kg/m³, et par une conductivité thermique inférieure à 0,032 W/mK mesurée selon la norme ISO 12677, et peut être obtenu à partir du procédé selon la revendication 6.

2. Matériau en mousse selon la revendication 1, dans lequel des mélanges polymères sont en plus présents en une quantité de pas plus de 40 % en poids et dans lequel les mélanges polymères supplémentaires sont sélectionnés dans le groupe de polyalkylène téréphtalates, d'acide polylactique, de polycarbonate, de polyoléfines, de polyacrylates, de polyamides, d'élastomères thermoplastiques, de polymères noyauenveloppe, de polymères à cristaux liquides (LCP), ou d'un mélange de ceux-ci.

3. Matériau en mousse selon l'une quelconque des revendications précédentes, dans lequel le matériau en mousse comprend des additifs inorganiques réfléchissants, tels que l'aluminium, l'argent, le graphène, des nanotubes de carbone, l'argile, le mica, ou des particules à base de graphite.

4. Matériau en mousse selon l'une quelconque des revendications précédentes, dans lequel le matériau en mousse comprend des additifs ignifuges.

5. Matériau en mousse selon l'une quelconque des revendications précédentes, dans lequel le matériau en mousse est stratifié avec des feuilles et/ou stratifiés polymères, polymères contenant des fibres de verre ou de carbone, et/ou d'aluminium.

6. Procédé de fabrication destiné à créer le matériau en mousse selon l'une quelconque des revendications 1 à 5 par extrusion de mousse réactive à travers une filière à multiples trous qui est sélectionnée d'une manière telle le matériau en mousse doit être considérablement étiré, produisant une orientation cellulaire forte avec un rapport de forme considérablement supérieur à 1,5, et dans lequel la viscosité intrinsèque du polymère augmente à 1,2 ml/g ou plus durant l'extrusion réactive en ajoutant des additifs d'extension de chaîne et dans lequel l'extrudeuse est équipée de vis ayant un rapport de compression supérieur à 2,0 et un L/D supérieur à 28, et dans lequel l'outillage d'extrusion est conçu pour un produit à densité plus élevée ayant une densité de 150 kg/m³.

7. Article de mousse obtenu à partir du matériau en mousse selon l'une quelconque des revendications 1 à 5.
